# EUROPEAN PATENT APPLICATION

(11) **EP 4 661 502 A1**
(43) Date of publication of application: **10.12.2025**
(21) Application number: 23919626.4
(22) Date of filing: 31.01.2023
(51) Int. Cl.: H04W 36/36

(54) **TERMINAL DEVICE AND BASE STATION DEVICE**

(71) Applicant: FUJITSU LIMITED, Kawasaki-shi, Kanagawa 211-8588 (JP)
(72) Inventor: UEMURA Katsunari, Kawasaki-shi, Kanagawa 211-8588 (JP); HORI Takako, Kawasaki-shi, Kanagawa 211-8588 (JP)
(74) Representative: Haseltine Lake Kempner LLP
(86) International application number: PCT/JP2023/002960
(87) International publication number: WO 2024/161482

(57) **Abstract**

A terminal apparatus which supports conditional handover, the terminal apparatus includes, a receiver which receives, from a base station apparatus, a plurality of candidate cell configurations respectively corresponding to a plurality of candidate cells regarding a handover destination, first information indicating a type of an event condition for executing the conditional handover, and second information indicating an order of the plurality of candidate cells, and a processor which determines, at a time of executing handover from a first cell to a second cell, whether to delete some candidate cell configurations of the plurality of candidate cell configurations or to delete all of the plurality of candidate cell configurations on a basis of whether or not the event condition of the type indicated by the first information is fulfilled and whether or not the second cell is a candidate cell corresponding to the order indicated by the second information.

## Description

### TECHNICAL FIELD

The present invention relates to a terminal apparatus, a base station apparatus, and a handover control method.

### BACKGROUND ART

In the 3rd Generation Partnership Project (3GPP) which is a standardization project, as New Radio (NR, also referred to as "5G") which is fifth generation mobile communication, technical specifications of communication standards that satisfy requirements of Enhanced Mobile Broadband (eMBB), Massive Machine Type Communications (MTC), and URLLC (Ultra-Reliable and Low Latency Communication) have been studied.

In 3GPP, a technique for enabling communication even in an area such as a mountain area or a sea area by applying NR to non-terrestrial networks (NTN) has been studied (for example, Non-Patent Literature 1).

On the other hand, a handover procedure called conditional handover (handover with with pre-configured condition) has been proposed (for example, Non-Patent Literatures 2 to 4).

In conditional handover (CHO), a base station apparatus notifies a terminal apparatus of cell configuration information designating a handover destination candidate cell and a handover trigger condition (measurement event type (measurement event, measurement report event)) in advance. The trigger condition is also referred to as an event condition. At this time, the base station apparatus can configure a maximum of eight candidate cells (that is, a maximum of eight conditional handover configurations) for the terminal apparatus. The terminal apparatus measures a serving cell and a neighboring cell. In addition, the terminal apparatus evaluates the measurement event on the basis of the trigger condition notified from the base station apparatus. Then, in a case where the notified trigger condition is fulfilled for the notified candidate cell, the terminal apparatus applies the cell configurations notified in advance as cell configurations of a handover destination and performs handover. As a result, the handover between cells can be quickly performed.

In the conditional handover, as described above, the base station apparatus notifies the terminal apparatus of a plurality of cell configurations. Then, after the conditional handover has succeeded, the terminal apparatus uses the cell configuration corresponding to a destination cell. That is, after the conditional handover has succeeded, the cell configuration corresponding to another cell becomes unnecessary. Therefore, the terminal apparatus which has performed the successful conditional handover autonomously deletes the cell configuration corresponding to a cell other than the destination cell.

### CITATION LIST

### NON-PATENT LITERATURE

Non-Patent Literature 1: 3GPP TR 38.821 V16.1.0 (2021-05)
Non-Patent Literature 2: 3GPP TS 38.300 V17.2.0 (2022-09)
Non-Patent Literature 3: 3GPP TS 38.331 V17.2.0 (2022-09)
Non-Patent Literature 4: R2-2212449

### SUMMARY OF INVENTION

### PROBLEMS TO BE SOLVED BY THE INVENTION

A method for applying conditional handover in non-terrestrial networks (NTN) has been studied.

An object according to one aspect of the present invention is to improve efficiency of mobility control in wireless communication between a terminal apparatus and a base station apparatus in non-terrestrial networks.

### MEANS FOR SOLVING THE PROBLEMS

A terminal apparatus which supports conditional handover, the terminal apparatus includes, a receiver which receives, from a base station apparatus, a plurality of candidate cell configurations respectively corresponding to a plurality of candidate cells regarding a handover destination, first information indicating a type of an event condition for executing the conditional handover, and second information indicating an order of the plurality of candidate cells, and a processor which determines, at a time of executing handover from a first cell to a second cell, whether to delete some candidate cell configurations of the plurality of candidate cell configurations or to delete all of the plurality of candidate cell configurations on a basis of whether or not the event condition of the type indicated by the first information is fulfilled and whether or not the second cell is a candidate cell corresponding to the order indicated by the second information.

The base station apparatus includes, a processor which generates a plurality of candidate cell configurations respectively corresponding to a plurality of candidate cells regarding a handover destination of the terminal apparatus, first information indicating a type of an event condition for executing the conditional handover in the terminal apparatus, and second information indicating an order of the plurality of candidate cells, and a transmitter which transmits the plurality of candidate cell configurations, the first information, and the second information to the terminal apparatus, so that, when the terminal apparatus performs handover from a first cell to a second cell, the terminal apparatus determines whether to delete some candidate cell configurations of the plurality of candidate cell configurations or to delete all of the plurality of candidate cell configurations on the basis of whether or not the event condition of the type indicated by the first information is fulfilled and whether or not the second cell is a candidate cell corresponding to the order indicated by the second information.

### ADVANTAGEOUS EFFECTS OF THE INVENTION

According to the above aspect, efficiency of mobility control in wireless communication between the terminal apparatus and the base station apparatus in the non-terrestrial networks is improved.

### BRIEF DESCRIPTION OF DRAWINGS

FIG. 1 is a diagram that illustrates a configuration example of a wireless communication system according to an embodiment.
FIG. 2 illustrates an example of a functional configuration of the terminal apparatus 10 according to the embodiment.
FIG. 3 illustrates an example of a functional configuration of the base station apparatus 20 according to the embodiment.
FIG. 4 illustrates an example of a communication area (cell) by a flying object in non-terrestrial networks (NTN).
FIG. 5 illustrates an example of a conditional handover event in the non-terrestrial networks (NTN).
FIG. 6 illustrates another example of the conditional handover event in the non-terrestrial networks (NTN).
FIG. 7 illustrates an example of link information (CHO order) indicating an application order of the plurality of candidate cell configurations.
FIG. 8 is a flowchart illustrating an example of processing of the terminal apparatus 10.
FIG. 9 illustrates an example of a handover sequence according to the first embodiment.
FIGS. 10A and 10B illustrate an example of a case where the predicted conditional handover succeeds.
FIG. 11 illustrates an example of a case where an unpredicted handover is performed.
FIG. 12 illustrates another example of the link information.
FIG. 13 illustrates still another example of the link information.
FIG. 14 is a flowchart illustrating an example of processing of the terminal apparatus according to the second embodiment.

### DESCRIPTION OF EMBODIMENTS

Hereinafter, embodiments of the present invention will be described in detail with reference to the drawings. Problems and embodiments in the present specification are merely exemplary and do not limit the claims of the present application. In particular, the technique of the present application can be applied as long as the expressions are technically equivalent even if the expressions are different, and the claims are not limited. Then, each embodiment can be appropriately combined within a range in which there is no contradiction in processing contents.

A known technique may be appropriately used in a wireless communication system according to the embodiments of the present invention. The applicable known technique may be, for example, 5G (NR), Beyond 5G, or other wireless communication methods. The wireless communication system according to the embodiments of the present invention targets NR, but is not limited thereto. For example, the embodiments of the present invention are also applicable to LTE and LTE-Advanced. In addition, the embodiments are also applicable to a wireless communication system using NR as a part of the wireless communication system. Further, the embodiments of the present invention are applicable to any wireless communication system including at least a terminal apparatus and a base station apparatus, and are also applicable to future wireless communication systems. In the following description, LTE and LTE-Advanced are also referred to as Evolved Universal Terrestrial Radio Access (E-UTRA), but the meanings thereof are the same.

Hereinafter, embodiments of the base station apparatus, a gateway, the terminal apparatus, and the wireless communication system disclosed in the present application will be described with reference to the drawings. Note that the following embodiments do not limit the disclosed technique.
In the NTN (in particular, the NTN using an artificial satellite), a satellite orbit viewed from the ground is substantially constant, so that the destination cell (NTN cell) of the terminal apparatus can be easily estimated a plurality of destinations ahead on the basis of position information of the terminal apparatus. For this reason, in the NTN, deleting the cell configuration information of the candidate cell which is not selected after the successful conditional handover may result in reduced efficiency of the handover procedure.

### <Wireless Communication System>

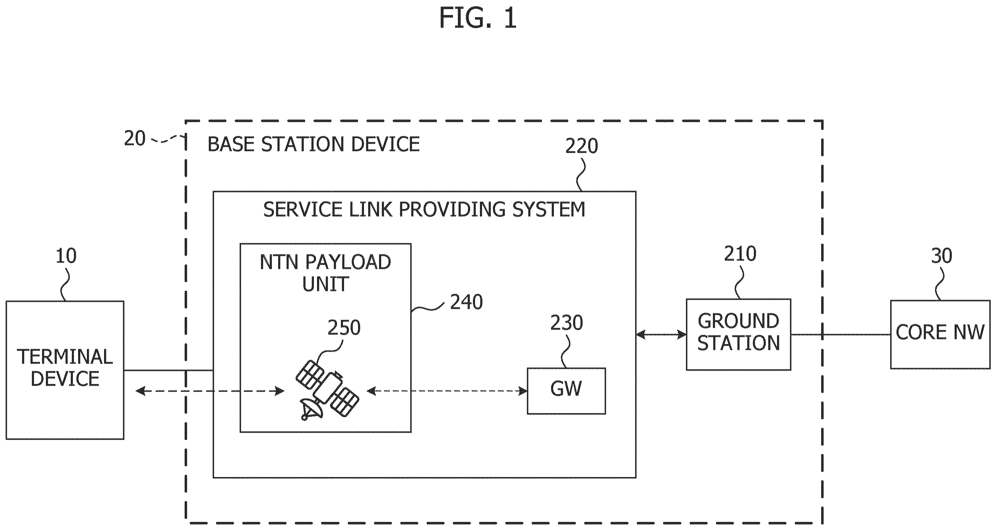

FIG. 1 illustrates a configuration example of a wireless communication system according to an embodiment of the present invention. The wireless communication system according to the embodiment includes, for example, one or more terminal apparatuses 10, a base station apparatus 20, and a core network 30.

The terminal apparatus 10 may be, for example, a wireless terminal such as a mobile phone, a smartphone, a personal digital assistant (PDA), a tablet, a wearable terminal, a personal computer, various apparatuses having a wireless communication function such as a vehicle, or equipment (sensor apparatuses or the like). In addition, the terminal apparatus 10 may be referred to as a wireless communication apparatus, a communication apparatus, a reception apparatus, a mobile station, user equipment (UE), a user apparatus, or the like.

A wireless communication service is provided to the terminal apparatus 10 by the base station apparatus 20 and the core network 30 in the wireless communication system. The core network 30 has functions such as management of service subscriber information, session management such as a voice call, and position registration management of the terminal apparatus 10, for example. In addition, the core network 30 transmits control data and/or user data to the terminal apparatus 10 via the base station apparatus 20.

The core network 30 may be a 5G core (5GC) in 5G (NR) or an evolved packet core (EPC) in 4G (E-UTRA). In addition, a connection method between the core network 30 and the base station apparatus 20 may be a non-stand alone (NSA) method or a stand alone (SA) method.

The base station apparatus 20 of 5G connected to the 5GC is a gNB, and the base station apparatus 20 of 4G connected to the EPC is an eNB. In addition, base station apparatuses of 5G are connected by an Xn interface, and base station apparatuses of 4G are connected by an X2 interface.

An area (cover area) formed by the base station apparatus 20 may be referred to as a "cell". E-UTRA and 5G are cellular communication systems constructed by a plurality of cells. As the wireless communication system according to the embodiment of the present invention, either a time division duplex (TDD) method or a frequency division duplex (FDD) method may be applied, or a different method may be applied for each cell.

The base station apparatus 20 in the NTN includes an existing base station apparatus (that is, the base station apparatus of the terrestrial network) and a service link providing system 220. In the following description, the base station apparatus of the terrestrial network may be referred to as a "ground station 210". That is, the base station apparatus 20 is substantially implemented by a base station system including a plurality of apparatuses.

The service link providing system 220 includes a gateway apparatus (GW) 230 and an NTN payload unit 240. The gateway apparatus 230 may communicate with a flying object 250. The flying object 250 is, for example, an unmanned aerial vehicle such as a high altitude platform station (HAPS) or a spacecraft such as an artificial satellite, and includes at least the NTN payload unit 240. The flying object 250 may operate as a relay (repeater, relay station). That is, the flying object 250 transfers a signal received from the gateway apparatus 230 to the terminal apparatus 10, and transfers a signal received from the terminal apparatus 10 to the gateway apparatus 230. Note that the NTN payload unit 240 may have some functions of the ground station 210. In addition, in the following description, the artificial satellite may be simply abbreviated as a "satellite", but its meaning, function, and role are the same unless otherwise noted.

A communication path between the gateway apparatus 230 and the NTN payload unit 240 may be referred to as a "feeder link". A communication path between the NTN payload unit 240 and the terminal apparatus 10 may be referred to as a "service link". Note that a communication method used for the feeder link is not limited to NR, and any communication method can be used.

The base station apparatus 20 may be configured to be divided into a centralized unit (CU) and a distributed unit (DU). The CU is connected to the core network, and the DU is connected to the terminal apparatus 10. In this case, a communication path between the CU and the DU is implemented by, for example, a fronthaul interface (F1 interface). In addition, a plurality of DUs may be connected to one CU.

In the example illustrated in FIG. 1, data (DL data, downlink data) transmitted from the core network 30 to the terminal apparatus 10 is transmitted from the core network 30 to the ground station 210 of the base station apparatus 20. The ground station 210 transmits the received data from the gateway apparatus 230 to the flying object 250 by using the feeder link. The flying object 250 transmits (transfers) the wireless signal received from the ground station 210 to the terminal apparatus 10 by using the service link. That is, the flying object 250 operates as the relay.

Data (UL data, uplink data) transmitted from the terminal apparatus 10 to the core network 30 is transmitted from the terminal apparatus 10 to the flying object 250 of the base station apparatus 20 by using the service link. The flying object 250 operates as the relay, and transmits (transfers) the received wireless signal to the gateway apparatus 230 by using the feeder link. The gateway apparatus 230 transmits the received wireless signal to the ground station 210. Then, the ground station 210 transmits the received data to the core network 30.

The terminal apparatus 10 and the base station apparatus 20 transmit and receive an RRC message (also referred to as RRC signaling) in a radio resource control (RRC) layer. In addition, the terminal apparatus 10 and the base station apparatus 20 transmit and receive a medium access control (MAC) control element (MAC CE) in a MAC layer. The RRC message is transmitted as a RRC protocol data unit (PDU), and a common control channel (CCCH), a dedicated control channel (DCCH), a paging control channel (PCCH), a broadcast control channel (BCCH), or a multicast control channel (MCCH) is used as a logical channel (LCH) to be mapped. The MAC CE is transmitted as a MAC PDU (or a MAC subPDU). The MAC subPDU is equivalent to a service data unit (SDU) in the MAC layer with, for example, an 8-bit header added, and the MAC PDU includes one or more MAC subPDUs.

### <Terminal Apparatus>

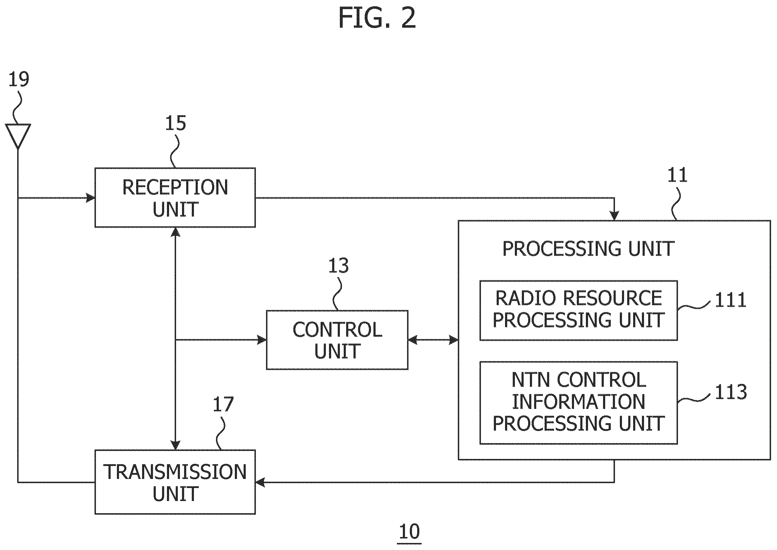

FIG. 2 illustrates an example of a functional configuration of the terminal apparatus 10 according to the embodiment. As illustrated in FIG. 2, the terminal apparatus 10 includes, for example, a processing unit 11, a control unit 13, a reception unit 15, a transmission unit 17, and a transmission/reception antenna unit 19. The processing unit 11 includes, for example, a radio resource processing unit 111 and an NTN control information processing unit 113. Note that the functional configuration illustrated in FIG. 2 is merely an example, and the functional categories and the names of the functional blocks may differ as long as the operation according to the embodiment can be executed.

The processing unit 11 generates, for example, control information for controlling the reception unit 15 and the transmission unit 17, and outputs the control information to the control unit 13. The processing unit 11 executes processing regarding, for example, a radio resource control layer, a packet data convergence protocol layer, a radio link control layer, and a medium access control layer.

The radio resource processing unit 111 manages various configuration information (RRC parameter, information element (IE)) of the terminal apparatus 10. For example, the radio resource processing unit 111 generates information arranged in each channel of the physical uplink, and outputs the information to the transmission unit 17.

The NTN control information processing unit 113 performs a series of control processing regarding NTN. For example, on the basis of an instruction from the radio resource processing unit 111 or an instruction from the base station apparatus 20, the NTN control information processing unit 113 executes measurement of a serving cell and a neighboring cell, start and stop of transmission/reception processing, start of a UL synchronization procedure, reacquisition of system information, event evaluation regarding handover, a series of processing regarding handover, and the like.

The control unit 13 performs various types of control in the terminal apparatus 10. For example, the control unit 13 generates a control signal for controlling the reception unit 15 and the transmission unit 17 on the basis of the control information from the processing unit 11. In addition, the control unit 13 controls wireless communication with the base station apparatus 20 on the basis of information regarding control of the feeder link and the service link.

On the basis of the control signal provided from the control unit 13, the reception unit 15 separates, demodulates, and decodes various signals received from the base station apparatus 20 via the transmission/reception antenna unit 19. The reception unit 15 passes the decoded information to the processing unit 11.

On the basis of the control signal provided from the control unit 13, the transmission unit 17 generates, for example, a physical uplink signal, and encodes and modulates the physical uplink signal provided from the processing unit 11 or the physical uplink channel. The transmission unit 17 multiplexes various signals and transmits the multiplexed signals to the base station apparatus 20 via the transmission/reception antenna unit 19.

Note that the processing unit 11 and the control unit 13 are implemented by, for example, a processor system including a processor and a memory. In this case, the processor provides the functions of the processing unit 11 and the control unit 13 by executing a program describing the operation of the terminal apparatus 10 to be described later. In addition, the processing unit 11 and the control unit 13 may be implemented by one processor system or may be implemented by a plurality of processor systems. Alternatively, the processing unit 11 and the control unit 13 may be implemented by a DSP, a hardware circuit, or the like.

### <Base Station Apparatus>

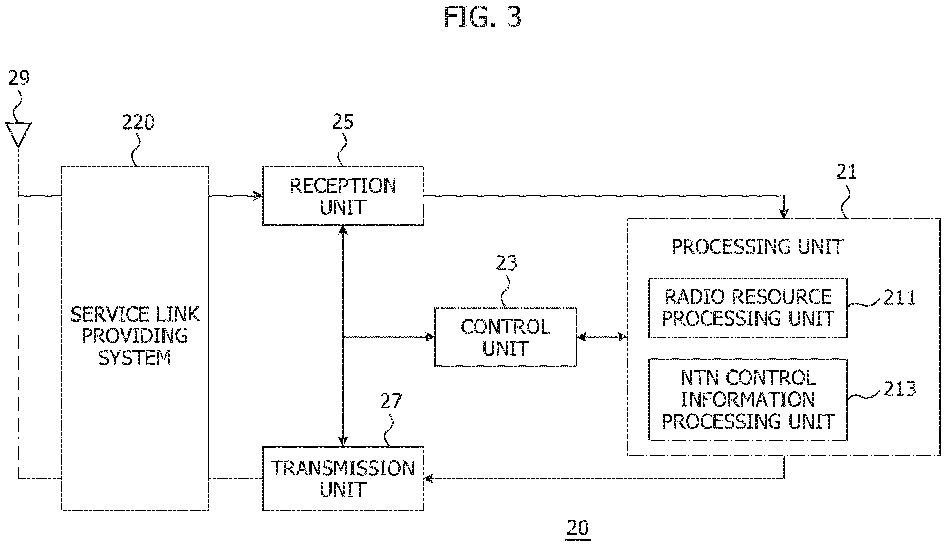

FIG. 3 illustrates an example of a functional configuration of the base station apparatus 20 according to the embodiment. As illustrated in FIG. 3, the base station apparatus 20 includes, for example, a processing unit 21, a control unit 23, a reception unit 25, a transmission unit 27, and a transmission/reception antenna unit 29. The processing unit 21 includes, for example, a radio resource processing unit 211 and an NTN control information processing unit 213. In addition, as illustrated in FIG. 1, the base station apparatus 20 includes the service link providing system 220.

As illustrated in FIG. 1, the base station apparatus 20 also includes the gateway apparatus 230, which is not illustrated in FIG. 3. The gateway apparatus 230 may be logically configured in FIG. 3. In addition, the gateway apparatus 230 may be implemented by a part of the control unit 23, the reception unit 25, and the transmission unit 27. Note that the functional configuration illustrated in FIG. 3 is merely an example, and the functional categories and the names of the functional blocks may differ as long as the operation according to the embodiment can be executed.

The processing unit 21 generates, for example, control information for controlling the reception unit 25 and the transmission unit 27, and outputs the control information to the control unit 23. The processing unit 21 executes processing regarding, for example, a radio resource control layer, a packet data convergence protocol (PDCP) layer, a radio link control (RLC) layer, and a medium access control layer.

The radio resource processing unit 211 generates, for example, downlink data, an RRC message, and a MAC control element disposed in a physical downlink shared channel PDSCH, and outputs the downlink data, the RRC message, and the MAC control element to the transmission unit 27. In addition, the radio resource processing unit 211 manages various types of configuration information of the terminal apparatus 10.

The NTN control information processing unit 213 performs a series of control processing regarding NTN. For example, on the basis of an instruction from the radio resource processing unit 211 or a notification by the signal or the RRC message from the terminal apparatus 10, the NTN control information processing unit 213 executes start and stop of transmission/reception processing, start of a UL synchronization procedure, update of system information, adjustment of a beam transmission angle, switching of a feeder link, switching of the gateway apparatus 230, pre-configuring of cell configuration regarding handover and a parameter regarding a measurement event type (measurement event), prediction of arrival of a cell, and the like. Note that in the following description, the "measurement event" includes a conditional event regarding conditional handover corresponding to a conditional event ID in addition to a measurement event corresponding to a conventional measurement event ID (for example, a measurement event A1).

The control unit 23 performs various types of control in the base station apparatus 20. For example, the control unit 23 generates a control signal for controlling the reception unit 25 and the transmission unit 27 on the basis of the control information from the processing unit 21. In addition, the control unit 23 performs various types of control on the gateway apparatus 230 and the service link providing system 220.

On the basis of the control signal provided from the control unit 23, the reception unit 25 separates, demodulates, and decodes various signals received from the terminal apparatus 10 or the core network 30 via the transmission/reception antenna unit 29. The reception unit 25 outputs the decoded information to the processing unit 21.

The transmission unit 27 generates, for example, a downlink reference signal on the basis of the control signal provided from the control unit 23. The transmission unit 27 performs encoding, modulation, multiplexing, and the like on various types of information provided from the processing unit 21, thereby transmitting a signal to the terminal apparatus 10 via the transmission/reception antenna unit 29.

In addition, the transmission unit 27 transmits data to the terminal apparatus 10 or the core network 30. The transmission unit 27 transmits, for example, information regarding control of the flying object 250 and the service link. The reception unit 25 receives data from the terminal apparatus 10 and the core network 30. The reception unit 25 receives, for example, information regarding control of the flying object 250, the feeder link, and the service link.

Note that the processing unit 21 and the control unit 23 are implemented by, for example, a processor system including a processor and a memory. In this case, the processor provides the functions of the processing unit 21 and the control unit 23 by executing a program describing the operation of the base station apparatus 20 to be described later. In addition, the processing unit 21 and the control unit 23 may be implemented by one processor system or may be implemented by a plurality of processor systems. Alternatively, the processing unit 21 and the control unit 23 may be implemented by a DSP, a hardware circuit, or the like.

### <NTN Cell>

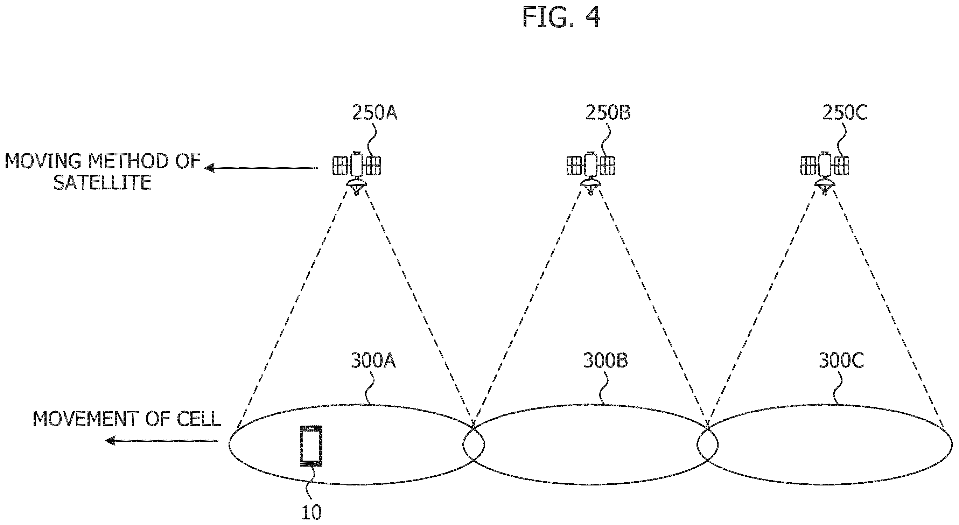

FIG. 4 illustrates an example of a communication area (cell) by a flying object in non-terrestrial networks (NTN). In FIG. 4, the flying object 250 (250A to 250C) relays the wireless signal received from the ground station 210 and transmits the signal as a beam to the ground. The terminal apparatus 10 regards, as a "serving cell", an area in which the signal (beam) transmitted from the flying object 250 can be received. In the example illustrated in FIG. 4, for the terminal apparatus 10, a cell 300A is the serving cell. Here, in a case where the flying object 250 is a so-called non-geostationary orbit (NGSO: Non-Geostationary Satellite Orbit) satellite (also referred to as an orbiting satellite) such as a low earth orbit (LEO) satellite or a medium earth orbit (MEO) satellite, the flying object 250 moves at high speed in a substantially constant direction with respect to the ground surface.

That is, cells 300A to 300C formed by the beams from the flying objects 250A to 250C each move at high speed in a substantially constant direction over time. Therefore, the serving cell of the terminal apparatus 10 changes with the lapse of time. For example, at a certain time in FIG. 4, the serving cell of the terminal apparatus 10 is the cell 300A. Thereafter, when each of the flying objects 250A to 250C moves, the cell 300B formed by the beam from the flying object 250B becomes the serving cell of the terminal apparatus 10. Further, when each of the flying objects 250A to 250C moves, the cell 300C formed by the beam from the flying object 250C becomes the serving cell of the terminal apparatus 10.

As described above, in an NTN system (in particular NGSO) using a satellite, a cell used in communication or a serving cell constantly moves, so that even if the terminal apparatus 10 is stationary, the current cell may become unavailable with the lapse of time. Therefore, the base station apparatus 20 needs to notify the terminal apparatus 10 of the time at which the flying object 250 passes over the terminal apparatus 10 (that is, the time at which the terminal apparatus 10 can communicate with the base station apparatus 20 via the flying object 250) in advance. In this regard, in the NTN system, the base station apparatus 20 notifies the terminal apparatus 10 of system information for NTN including the time information. The terminal apparatus 10 manages a measurement timing of the serving cell or the neighboring cell on the basis of the time information, and performs the measurement at a appropriate timings. The base station apparatus 20 transmits a set of information corresponding to the satellite communication to the terminal apparatus 10 by using, for example, a system information block type 19 (SIB19). In addition, the system information for NTN (SIB19) can notify the terminal apparatus 10 of orbit information (ephemeris information) of the non-geostationary orbit satellite and an uplink adjustment value (common timing advance (Common TA)).

### <Conditional Handover>

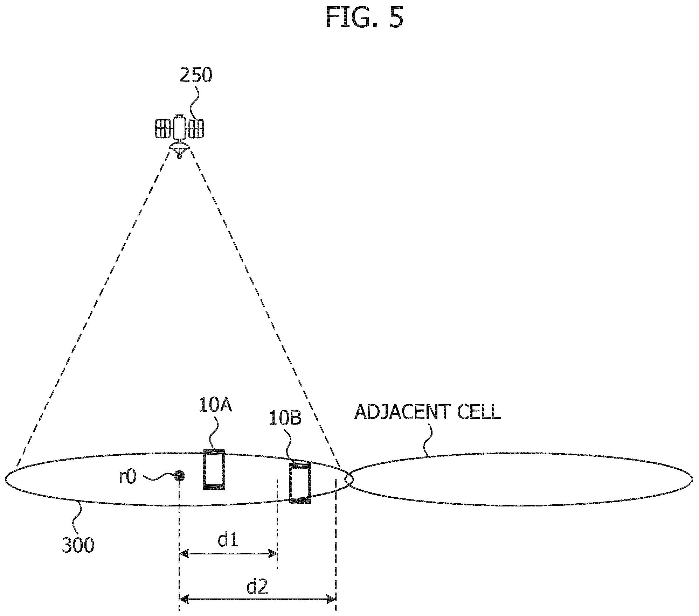

FIG. 5 illustrates an example of a conditional handover event in the non-terrestrial networks (NTN). The conditional handover event illustrated in FIG. 5 is a distance-based measurement event, and is also referred to as a conditional event D1 (ContEventD1). In FIG. 5, the terminal apparatus 10 (10A, 10B) measures a distance from a predetermined reference point r0 to its own station. Then, the terminal apparatus 10 evaluates the handover event by comparing the measured distance with a configured threshold. Note that it is assumed that the terminal apparatus 10 has a positioning function such as GPS.

In the distance-based measurement event, the reference point r0 (reference point) serving as a reference of distance measurement is configured in a cell. The base station apparatus 20 notifies the terminal apparatus 10 of the reference point r0. In addition, the base station apparatus 20 notifies the terminal apparatus 10 of hysteresis Hys and a threshold (TH1, TH2) as the information corresponding the conditional event D1. The terminal apparatus 10 in which the conditional event D1 is configured as a valid measurement event measures a distance d between a position of the reference point r0 and a position of its own station. Then, when a value d1 obtained by subtracting the hysteresis Hys from the distance d is larger than a threshold TH1 and a value d2 obtained by adding the hysteresis Hys to the distance d is smaller than a threshold TH2, the terminal apparatus 10 determines that a fulfillment of event condition is satisfied. In the example illustrated in FIG. 5, the terminal apparatus 10B is located between the distance d1 and the distance d2, and the conditional event D1 is fulfilled. In this case, the terminal apparatus 10B determines that conditional handover to a pre-configured candidate cell is to be performed.

On the other hand, when the value obtained by adding the hysteresis Hys to the distance d is larger than the threshold TH1 and the value obtained by subtracting the hysteresis Hys from the distance d is smaller than the threshold TH2, the terminal apparatus 10 determines that the fulfillment of event condition is not satisfied. In the example illustrated in FIG. 5, the conditional event D1 is not fulfilled in the terminal apparatus 10A.

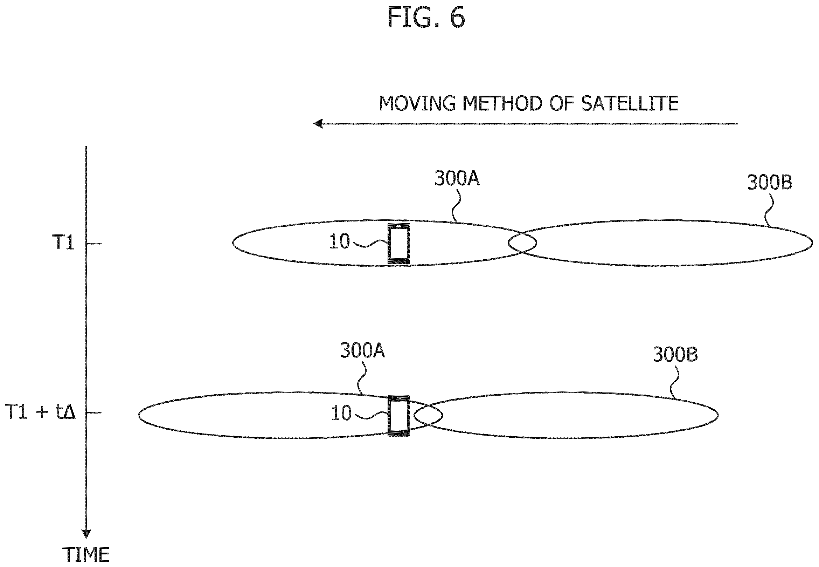

FIG. 6 illustrates another example of the conditional handover event in the non-terrestrial networks (NTN). The conditional handover event illustrated in FIG. 6 is a time-based measurement event, and is also referred to as a conditional event T1 (ContEventT1). The terminal apparatus 10 measures a time from a certain reference time to a current time. Then, the terminal apparatus 10 evaluates the handover event by comparing the measured time with a set threshold.

In the example illustrated in FIG. 6, the terminal apparatus 10 is located in the cell 300A. Then, the base station apparatus 20 (not illustrated) notifies the terminal apparatus 10 of elapsed time information (threshold TH_t) from January 1, 1980 of the Gregorian calendar and event establishment duration information (duration) as information regarding the conditional event T1. The elapsed time information is notified in units of 10 milliseconds. The terminal apparatus 10 in which the conditional event T1 is configured as the valid measurement event counts the current time in units of milliseconds and starts comparison with the notified elapsed time information (threshold TH_t). Then, when the current time exceeds the notified threshold TH_t, the terminal apparatus 10 determines that the event establishment condition is satisfied.

When the current time exceeds a value obtained by adding the event establishment duration information (duration) to the threshold TH_t, the terminal apparatus 10 determines that the event establishment condition is no longer satisfied. In the example illustrated in FIG. 6, at time T1, the conditional event T1 is not fulfilled in the terminal apparatus 10. Thereafter, the conditional event T1 is fulfilled at the time (that is, time T1+Δt) when time Δt has elapsed from the time T1. In this case, the terminal apparatus 10 performs conditional handover to a pre-configured candidate cell (for example, the cell 300B).

Embodiments of the present invention will be described in detail below with reference to the accompanying drawings in consideration of the above matters. Note that in the description of the embodiments of the present invention, when it is determined that a specific description of a known function or configuration related to the embodiments of the present invention obscures the gist of the embodiment of the present invention, the detailed description thereof will be omitted.

### <First Embodiment>

A terminal apparatus according to a first embodiment of the present invention receives, from a base station apparatus, a plurality of candidate cell configurations respectively corresponding to a plurality of candidate cells regarding a handover destination, first information indicating a type of an event condition for executing conditional handover, and second information indicating an order of the plurality of candidate cells. Then, at a time of executing handover from a first cell to a second cell, the terminal apparatus determines whether to delete some candidate cell configurations of the plurality of candidate cell configurations or to delete all of the plurality of candidate cell configurations, on the basis of whether or not the event condition of the type indicated by the first information is fulfilled and whether or not the second cell is a candidate cell corresponding to the order indicated by the second information.

A base station apparatus in the first embodiment generates a plurality of candidate cell configurations respectively corresponding to a plurality of candidate cells regarding a handover destination of a terminal apparatus, first information indicating a type of an event condition for executing conditional handover in the terminal apparatus, and second information indicating an order of the plurality of candidate cells. Then, the base station apparatus transmits, to the terminal apparatus, the plurality of candidate cell configurations, the first information, and the second information which are generated. Accordingly, in handover from a first cell to a second cell, the terminal apparatus can determine whether to delete some candidate cell configurations of the plurality of candidate cell configurations or to delete all of the plurality of candidate cell configurations, on the basis of whether or not the event condition of the type indicated by the first information is fulfilled and whether or not the second cell is a candidate cell corresponding to the order indicated by the second information.

The second information indicating the order of the plurality of candidate cells is realized by, for example, information (link information) indicating an application order of candidate cell configuration information. As the link information, for example, an ID (CondReconfigId) for identifying a conditional handover configuration may be used, or a physical cell ID (PCI: PhysCellId) included in the conditional handover configuration may be used. In addition, the link information may use a report configuration ID (ReportConfigId) for identifying a report configuration including a measurement event, or may use a measurement ID (MeasId) indicating a correspondence between the report configuration and a measurement object. Further, other identification information may be used as long as the conditional handover configuration to be applied can be uniquely specified. For example, an ID (LinkId) for linking corresponding IDs may be added, or another new ID may be added to the RRC message. In the following example, CondReconfigId is used as the information for identifying the conditional handover configuration, but replacing CondReconfigId with another ID have the same effect.

Note that, in a case where a cell (serving cell) used in communication of the terminal apparatus 10 is changed according to the handover, one or more of the flying object 250, the gateway apparatus 230, the ground station 210, and the base station apparatus 20 may be changed.

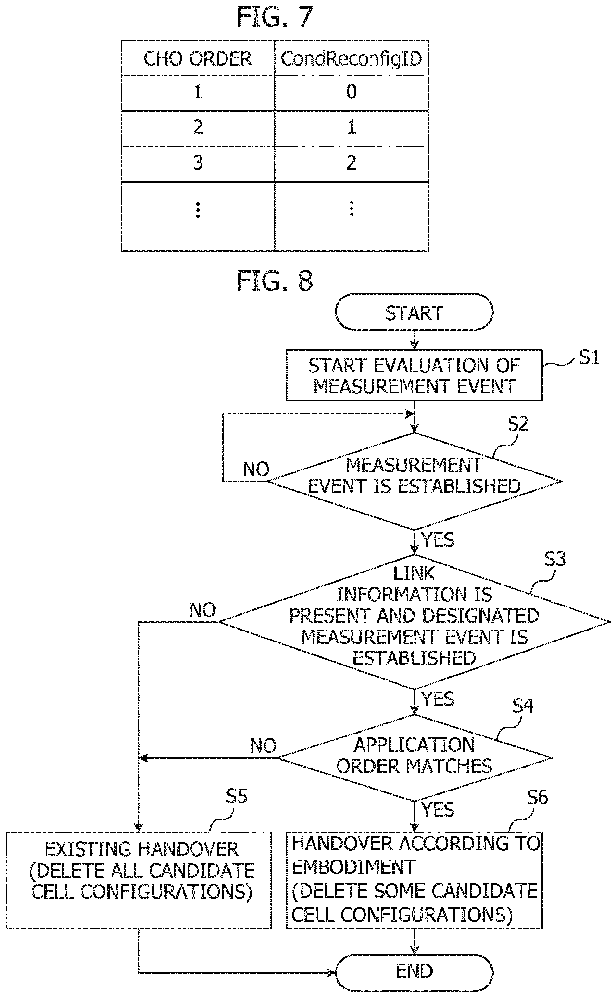

FIG. 7 illustrates an example of link information (CHO order) indicating an application order of the plurality of candidate cell configurations. In this example, the link information indicates that the candidate cell configuration identified by "CondReconfigId:0" is applied first, the candidate cell configuration identified by "CondReconfigId:1" is applied second, and the candidate cell configuration identified by "CondReconfigId:2" is applied third. Note that each candidate cell configuration includes information for designating or identifying a handover destination cell.

The base station apparatus 20 determines (predicts or estimates) which satellite arrives over the terminal apparatus 10 in what order, on the basis of positioning information of the terminal apparatus 10, information indicating an orbit of a satellite covering the position of the terminal apparatus 10, periodical information, information indicating an overflight stay time, and the like. That is, the base station apparatus 20 determines (predicts or estimates) in what order the cell formed by each satellite covers the terminal apparatus 10. Then, the base station apparatus 20 generates a conditional handover configuration including cell configuration information corresponding to each of a plurality of predicted cells. Thereafter, the base station apparatus 20 notifies the terminal apparatus 10 of a plurality of conditional handover configurations and the link information (CHO order).

Note that the base station apparatus 20 transmits the link information to the terminal apparatus 10 by using an RRC message (for example, an RRC Setup message, an RRC Reconfiguration message, or the like). The terminal apparatus 10 acquires the link information from the received RRC message.

FIG. 8 is a flowchart illustrating an example of processing of the terminal apparatus 10. Here, it is assumed that the terminal apparatus 10 receives the link information together with the conditional handover configuration from the base station apparatus 20. The conditional handover configuration includes, for example, information indicating a handover destination candidate cell. In addition, the conditional handover configuration may include information regarding a handover trigger condition (a measurement event type or a conditional event ID). Alternatively, the terminal apparatus 10 may be notified of the handover trigger condition independently of the conditional handover configuration.

In S1, the terminal apparatus 10 decides a target cell of the conditional handover on the basis of the conditional handover configuration received from the base station apparatus 20. Then, the terminal apparatus 10 starts evaluation of the measurement event for the serving cell and/or the decided target cell. The target cell is decided on the basis of an order of the CHO. Here, when the conditional handover is not yet performed in the terminal apparatus 10 after the conditional handover configuration is received, the processing is executed on the basis of "CHO order:1". In the example illustrated in FIG. 7, the cell indicated by the conditional handover configuration corresponding to "CondReconfigId:0" is regarded as the target cell. Similarly, when conditional handover is performed once in the terminal apparatus 10 and the conditional handover is successful, the processing is executed on the basis of "CHO order:1". In the example illustrated in FIG. 7, the cell indicated by the conditional handover configuration corresponding to "CondReconfigId:1" is regarded as the target cell.

In S2, the terminal apparatus 10 determines whether or not the condition for establishing the configured measurement event is satisfied. When the conditional event D1 illustrated in FIG. 5 is indicated, the terminal apparatus 10 determines whether or not the measurement event is fulfilled, on the basis of the distance from the reference point r0. When the conditional event T1 illustrated in FIG. 6 is indicated, the terminal apparatus 10 determines whether or not the measurement event is fulfilled, on the basis of the elapsed time from the reference time.

If the measurement event is not fulfilled (S2: No), the terminal apparatus 10 continues related measurement and repeats evaluation of the measurement event. That is, the terminal apparatus 10 repeats the evaluation of the measurement event without performing handover. Then, if the measurement event is fulfilled, that is, if the trigger condition for the measurement event is satisfied (S2: Yes), the processing of the terminal apparatus 10 proceeds to S3.

In S3, the terminal apparatus 10 determines whether or not the link information has been notified from the base station apparatus 20 and whether or not the measurement event fulfilled in S2 is the indicated measurement event. Specifically, the terminal apparatus 10 determines whether or not the conditional handover configuration includes valid link information and whether or not the fulfilled measurement event is a measurement event related to NTN (that is, the conditional event D1 or the conditional event T1). Note that as for whether the measurement event is a predetermined measurement event, the base station apparatus 20 may add information such as an additional identifier to the report configuration. Alternatively, the base station apparatus 20 may designate a type of the measurement event related to the NTN.

If the valid link information is not received and/or if the fulfilled measurement event is not the indicated measurement event (S3: No), in S5, the terminal apparatus 10 performs an existing conditional handover procedure (alternatively, an existing handover procedure). In this case, after the conditional handover (alternatively, handover) has succeeded, the terminal apparatus 10 removes (deletes) all the conditional handover configurations regarding candidate cells other than the target cell (that is, a targeted cell). For example, when the received signal strength of the terminal apparatus 10 becomes lower than a threshold level, the processing of S5 may be executed.

If the valid link information has been received and the fulfilled measurement event is the indicated measurement event (S3: Yes), in S4, the terminal apparatus 10 determines whether or not the target cell at the time of establishment of the measurement event satisfies the condition indicated by the link information. Specifically, the terminal apparatus 10 determines whether or not the target cell at the time of establishment of the measurement event matches with the cell determined on the basis of the link information. Then, if the cells do not match (S4: No), the terminal apparatus 10 determines that the conditional handover to an expected cell is not performed. Then, in S5, the terminal apparatus 10 performs the existing conditional handover procedure (alternatively, the existing handover procedure). Also in this case, the terminal apparatus 10 deletes all conditional handover configurations regarding candidate cells other than the target cell (that is, the targeted cell).

On the other hand, if the target cell at the time of establishment of the measurement event matches with the cell determined on the basis of the link information (S4: Yes), in S6, the terminal apparatus 10 performs the conditional handover procedure according to the embodiment of the present invention. In this case, after the conditional handover has succeeded, the terminal apparatus 10 deletes the conditional handover configuration regarding the target cell (targeted cell), but maintains the conditional handover configuration regarding the other candidate cells without deletion.

Here, it is assumed that the terminal apparatus 10 has received the link information illustrated in FIG. 7. In addition, it is assumed that the terminal apparatus 10 has not yet performed the conditional handover after receiving the conditional handover configuration. In this case, the processing is executed on the basis of "CHO order:1". That is, the processing is executed on the basis of the conditional handover configuration identified by "CondReconfigId:0" associated with "CHO order:1". Then, when the conditional handover to the target cell indicated by the conditional handover configuration has succeeded, the terminal apparatus 10 deletes the conditional handover configuration corresponding to "CondReconfigId:0", but maintains the conditional handover configuration corresponding to "CondReconfigId:1" and the conditional handover configuration corresponding to "CondReconfigId:2".

Incidentally, when deleting the conditional handover configuration regarding the target cell, the terminal apparatus 10 may further delete a conditional handover configuration scheduled to be applied before the conditional handover configuration. For example, in an operation state indicated by "CHO order:1" of the link information illustrated in FIG. 7, it is assumed that the conditional handover to the target cell corresponding to "CondReconfigId:1" succeeds instead of the target cell corresponding to "CondReconfigId:0". In this case, not only the conditional handover configuration identified by "CondReconfigId:1" but also the conditional handover configuration identified by "CondReconfigId:0" is deleted. However, even in this case, the conditional handover configuration identified by "CondReconfigId:2" is preferably maintained.

In this way, the terminal apparatus 10 deletes some or all of the pre-configured candidate cell configuration information on the basis of measurement event type information of the successful conditional handover, target cell information, and the link information indicating the order of the conditional handover. Note that the order of the procedure of the flowchart illustrated in FIG. 8 may be appropriately changed so as to obtain a similar effect. For example, the processing of S3 and the processing of S4 may be executed at the same time, or the order thereof may be switched and executed.

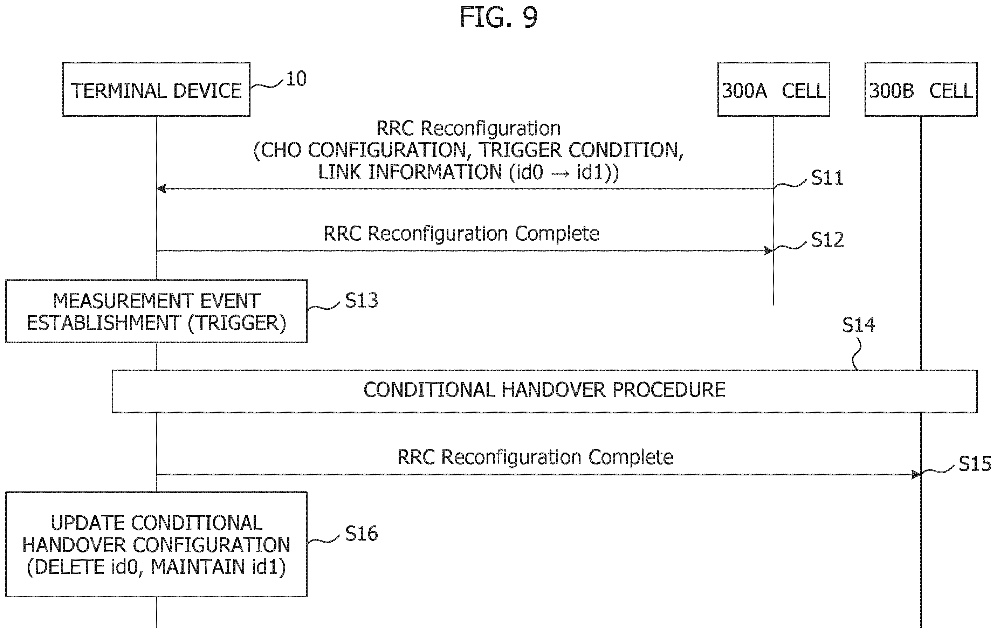

FIG. 9 illustrates an example of a handover sequence according to the first embodiment. In FIG. 9, the cell 300A is the serving cell of the terminal apparatus 10. The cell 300B is the neighboring cell of the terminal apparatus 10 and is a handover destination candidate cell. In the example illustrated in FIG. 4, the cell 300A and the cell 300B are formed by the flying object 250A and the flying object 250B, respectively.

The terminal apparatus 10 is connected to the base station apparatus 20 (not illustrated) including a flying object, a gateway apparatus, a ground station, and the like in the cell 300A. Then, in S11, the terminal apparatus 10 receives the RRC message (RRCReconfiguration) transmitted from the base station apparatus 20. Note that the base station apparatus 20 may transmit an RRCSetup message or an RRCReestabilishment message instead of the RRCReconfiguration message.

The RRC message transmitted from the base station apparatus 20 in S11 includes the conditional handover configuration (Conditional configuration) and the link information. In the example illustrated in FIG. 9, the conditional handover configuration identified by id0 and the conditional handover configuration identified by id1 are provided to the terminal apparatus 10. The link information indicates an application order of the conditional handover configurations. In this example, the link information indicates that id0 is applied first and id1 is applied second.

The base station apparatus 20 further transmits, to the terminal apparatus 10, the information indicating the handover trigger condition. The trigger condition includes a measurement event type and a conditional event ID regarding conditional handover. The trigger condition may be determined for each cell. The trigger condition may be transmitted together with the conditional handover configuration in S11, or may be transmitted separately from the conditional handover configuration.

The terminal apparatus 10 recognizes the order of the conditional handover configurations to be applied, on the basis of the RRC message received from the base station apparatus 20. Here, each conditional handover configuration includes information indicating the handover destination candidate cell of the terminal apparatus 10. That is, the terminal apparatus 10 can recognize the order of candidate cells to be accessed. Thereafter, in S12, the terminal apparatus 10 generates a response message (RRCReconfigurationComplete) to the received RRC message, and transmits the response message to the base station apparatus 20. Note that the terminal apparatus 10 may transmit an RRCSetupComplete message or an RRCReestabulishmentComplete message to the base station apparatus 20 according to the received RRC message.

In S13, the terminal apparatus 10 decides a target cell on the basis of the received conditional handover configuration, performs measurement of cell quality, and starts evaluation of a indicated measurement event. Then, when the indicated measurement event is fulfilled (triggered), in S14, the terminal apparatus 10 performs a conditional handover procedure. In the example illustrated in FIG. 9, the terminal apparatus 10 attempts the conditional handover to the cell 300B that is the handover destination candidate cell corresponding to the triggered measurement event.

When the conditional handover to the cell 300B has succeeded (that is, when a random access procedure has succeeded in the cell configuration of the cell 300B), in S15, the terminal apparatus 10 generates an RRC message (RRCReconfigurationComplete) indicating that the conditional handover has succeeded, and transmits the RRC message to the base station apparatus 20.

In S16, the terminal apparatus 10 determines whether or not the fulfilled measurement event is the measurement event indicated by the base station apparatus 20 and whether or not the target cell at the time of establishment of the measurement event satisfies the application order indicated by the link information. In the example illustrated in FIG. 9, it is assumed that these requirements are satisfied. In addition, it is assumed that the conditional handover configuration identified by id0 is applied and the conditional handover to the cell 300B has succeeded. In this case, the terminal apparatus 10 deletes the conditional handover configuration identified by id0, but maintains the conditional handover configuration identified by id1.

Note that the base station apparatus 20 recognizes, based on the RRC message received from the terminal apparatus 10, that the terminal apparatus 10 has applied the conditional handover configuration according to the link information. Then, the base station apparatus 20 similarly deletes the ID deleted by the terminal apparatus 10, in order to align the conditional handover configuration between the terminal apparatus 10 and the base station apparatus 20. In this example, id0 is also deleted in the base station apparatus 20.

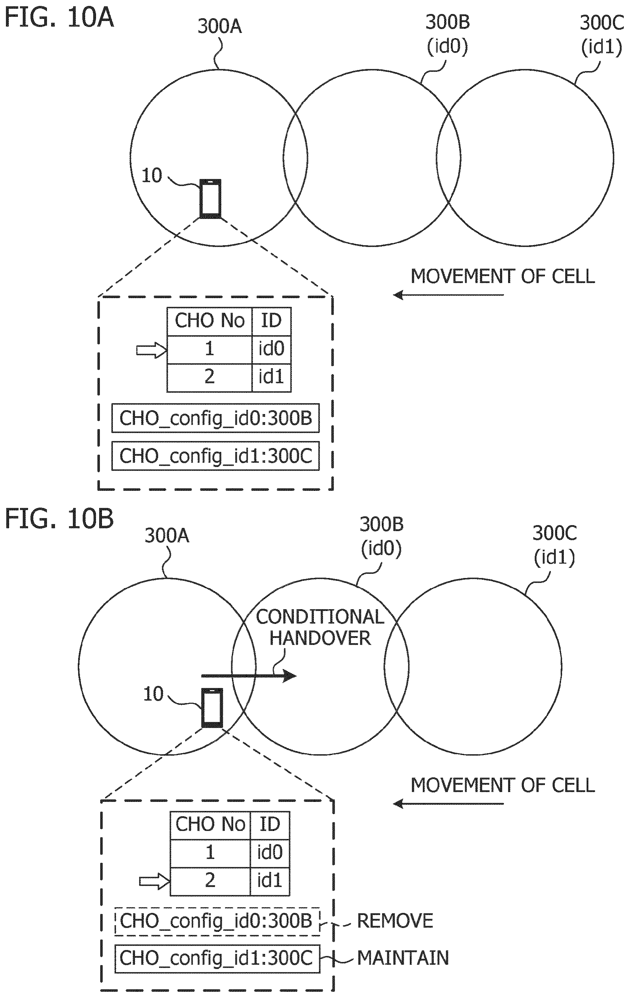

FIG. 10 illustrates an example of a case where the predicted conditional handover succeeds. In this example, the terminal apparatus 10 is connected to the cell 300A. In addition, the base station apparatus 20 (not illustrated) recognizes the following situation.
(1) The terminal apparatus 10 is connected to the cell 300A.
(2) It is expected that the serving cell of the terminal apparatus 10 transitions from the cell 300A to the cell 300B and then to the cell 300C.

Therefore, the base station apparatus 20 transmits CHO configuration_id0 and CHO configuration_id1 to the terminal apparatus 10 (In FIG. 9, S11). CHO configuration_id0 is a conditional handover configuration including information indicating that a candidate cell for conditional handover is the cell 300B. CHO configuration_id1 is a conditional handover configuration including information indicating that a candidate cell for conditional handover is the cell 300C. At this time, the base station apparatus 20 transmits link information to the terminal apparatus 10 together with the conditional handover configuration. In this case, the link information includes information indicating that CHO configuration_id0 is applied first and CHO configuration_id1 is applied second. The conditional handover configuration and the link information are saved in the memory of the terminal apparatus 10 as illustrated in FIG. 10a. Further, the base station apparatus 20 notifies the terminal apparatus 10 of the trigger condition including the measurement event type or the conditional event ID regarding the conditional handover.

It is assumed that the terminal apparatus 10 has not yet performed the conditional handover after receiving the above-described conditional handover configuration. In this case, the terminal apparatus 10 performs cell measurement on the basis of the conditional handover configuration corresponding to the "CHO order: 1" of the link information (In FIG. 8, S1). Here, the conditional handover configuration (that is, CHO configuration_id0) corresponding to "CHO order: 1" designates the cell 300B as the target cell. Therefore, the terminal apparatus 10 measures the cell 300A and the cell 300B. In addition, the terminal apparatus 10 evaluates whether or not the measurement event (for example, the conditional event D1 or the conditional event T1) indicated by the base station apparatus 20 is fulfilled.

When the indicated measurement event is fulfilled in the terminal apparatus 10, a cell to be connected is decided by a random access procedure. As a result, as illustrated in FIG. 10b, it is assumed that the conditional handover to the cell 300B succeeds. Here, the candidate cell indicated by CHO configuration_id0 matches with the actual handover destination cell. Therefore, the terminal apparatus 10 estimates that the prediction of the base station apparatus 20 is correct. That is, the terminal apparatus 10 estimates that the conditional handover configuration regarding the next handover destination of the cell 300B is valid. Therefore, the terminal apparatus 10 maintains the conditional handover configuration (that is, CHO configuration_id1) regarding the next handover destination of the cell 300B without deletion. Note that the conditional handover configuration (that is, CHO configuration_id0) corresponding to the handover destination cell is deleted.

Thereafter, the terminal apparatus 10 continues the processing regarding the conditional handover by using the conditional handover configuration (that is, CHO configuration_id1) corresponding to the "CHO order:2". Accordingly, the terminal apparatus 10 can control the conditional handover from the cell 300B to the cell 300C without receiving a new conditional handover configuration from the base station apparatus 20.

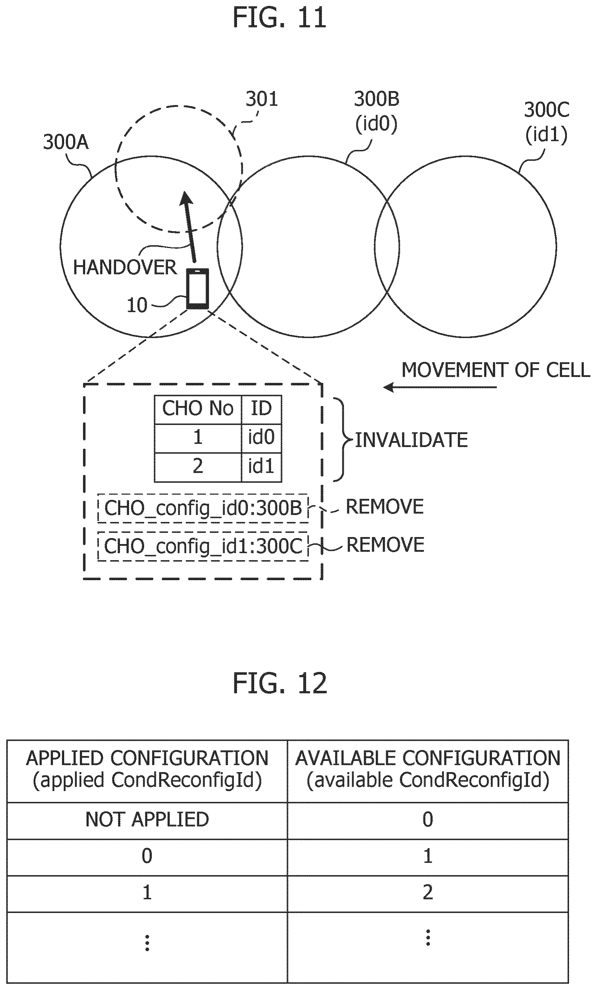

FIG. 11 illustrates an example of a case where an unpredicted handover is performed. Note that the conditional handover configuration and the link information transmitted from the base station apparatus 20 (not illustrated) to the terminal apparatus 10 are the same as those in FIGS. 10 and 11. That is, the conditional handover configuration and the link information illustrated in FIG. 10a are saved in the memory of the terminal apparatus 10.

However, in the case illustrated in FIG. 11, the terminal apparatus 10 executes handover to not the cell 300B but the cell 301 that is not predicted. The cell 301 is formed by, for example, a base station provided on the ground. Then, for example, handover to the hand to the cell 301 is performed due to the reception power of the terminal apparatus 10 being lower than a threshold level.

In this case, the candidate cell indicated by CHO configuration_id0 does not match with the actual handover destination cell. Then, the terminal apparatus 10 determines that it is not preferable to continue the conditional handover predicted by the base station apparatus 20. Therefore, as illustrated in FIG. 11, the terminal apparatus 10 deletes the conditional handover configuration saved in the memory. At this time, the link information may be invalidated.

FIG. 12 illustrates another example of the link information. The link information illustrated in FIG. 7 indicates the application order of the candidate cell configuration information, but in the link information illustrated in FIG. 12, an ID (CondReconfigId) for identifying a conditional handover configuration to be applied next is associated with an ID (CondReconfigId) for identifying an applied conditional handover configuration. The base station apparatus 20 generates a plurality of conditional handover configurations including candidate cell configuration information indicating the predicted candidate cell, links IDs (CondReconfigId) for identifying the respective conditional handover configurations in chronological order on the basis of the order in which the cells arrive at the terminal apparatus 10, and notifies the terminal apparatus 10 of the linked IDs.

In a case where the terminal apparatus 10 has not yet performed the conditional handover, the terminal apparatus 10 determines that its own state is "not applied (initial state)". In the example illustrated in FIG. 12, the terminal apparatus 10 regards, as the target cell, the cell indicated by the conditional handover configuration corresponding to "CondReconfigId:0". In a case where the conditional handover based on the predetermined measurement event has succeeded with respect to the target cell corresponding to "CondReconfigId:0", the terminal apparatus 10 performs the above-described conditional handover procedure. That is, after the conditional handover has succeeded, the terminal apparatus 10 deletes the conditional handover configuration regarding the target cell (targeted cell) and maintains the conditional handover configuration regarding the other candidate cells. On the other hand, in a case where the conditional handover (alternatively, handover) has succeeded with respect to another cell, the terminal apparatus 10 performs an existing conditional handover procedure (alternatively, handover procedure). In this case, the terminal apparatus 10 may delete all conditional handover configurations.

In the case where the conditional handover configuration (candidate cell configuration information) corresponding to "CondReconfigId:0" is applied in the terminal apparatus 10, in the example illustrated in FIG. 12, the cell indicated by the conditional handover configuration corresponding to "CondReconfigId:1" is regarded as the target cell. Similarly, in the case where the conditional handover configuration (candidate cell configuration information) corresponding to "CondReconfigId:1" is applied, in the example illustrated in FIG. 12, the cell indicated by the conditional handover configuration corresponding to "CondReconfigId:2" is regarded as the target cell.

Note that the terminal apparatus 10 may determine whether each conditional handover configuration is valid or invalid, instead of regarding, as the target cell, the cell indicated by the corresponding conditional handover configuration. For example, in a case where the applied conditional handover configuration is "CondReconfigId:0", the terminal apparatus 10 may regard, as invalid, the conditional handover configuration corresponding to "CondReconfigId:2", and may refrain from evaluating the corresponding measurement event.

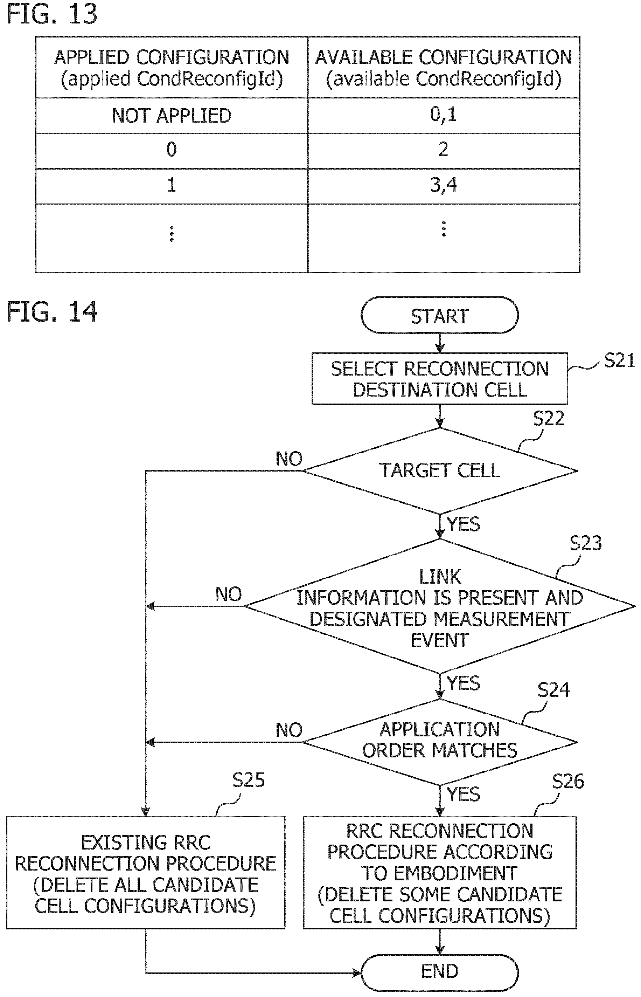

FIG. 13 illustrates still another example of the link information. In the link information illustrated in FIG. 12, one "next available conditional handover configuration" is associated with one conditional handover configuration. On the other hand, in the link information illustrated in FIG. 13, one or more "next available conditional handover configurations" can be associated with one conditional handover configuration. The base station apparatus 20 generates a plurality of conditional handover configurations including candidate cell configuration information indicating the predicted candidate cell, links IDs (CondReconfigId) for identifying the respective conditional handover configurations in chronological order on the basis of the order in which the cells arrive at the terminal apparatus 10, and notifies the terminal apparatus 10 of the linked IDs.

In a case where the terminal apparatus 10 has not yet performed the conditional handover, the terminal apparatus 10 determines that its own state is "not applied (initial state)". In the example illustrated in FIG. 13, the terminal apparatus 10 regards, as the target cell, each of the cells represented by the conditional handover configurations corresponding to "CondReconfigId:0" and "CondReconfigId:1". That is, two target cells are indicated. Then, in a case where the conditional handover based on the predetermined measurement event has succeeded with respect to one of the two target cells, the terminal apparatus 10 performs the above-described conditional handover procedure. That is, after the conditional handover has succeeded, the terminal apparatus 10 deletes the conditional handover configuration regarding the handover destination cell. In addition, the terminal apparatus 10 also deletes the conditional handover configuration regarding the target cell indicated together with the handover destination cell. However, the terminal apparatus 10 maintains the conditional handover configurations regarding the other candidate cells. In the example illustrated in FIG. 13, each of the conditional handover configurations corresponding to "CondReconfigId:0" and "CondReconfigId:1" is deleted, but each of the conditional handover configurations corresponding to "CondReconfigId:2", "CondReconfigId:3", and "CondReconfigId:4" is maintained.

Alternatively, the terminal apparatus 10 may delete the conditional handover configuration regarding the handover destination cell, the conditional handover configuration regarding another target cell, and the conditional handover configuration associated with another target cell. For example, it is assumed that the conditional handover to the cell corresponding to "CondReconfigId:0" in the example illustrated in FIG. 13 has succeeded. In this case, the conditional handover configuration corresponding to "CondReconfigId:0" is deleted. At this time, the conditional handover configuration corresponding to "CondReconfigId:1" which is another target cell is also deleted. Further, each of the conditional handover configurations corresponding to "CondReconfigId:3" and "CondReconfigId:4", which are associated with the conditional handover configuration corresponding to "CondReconfigId:1", is also deleted. However, the conditional handover configuration corresponding to "CondReconfigId:2" not corresponding to the above-described case is maintained.

In a case where the conditional handover (alternatively, handover) has succeeded with respect to the cell other than the candidate cell indicated by the link information, the terminal apparatus 10 performs an existing conditional handover procedure (or handover procedure). In this case, all conditional handover configurations are deleted from the memory of the terminal apparatus 10.

Note that the base station apparatus 20 may add, to each conditional handover configuration, the link information including one or more IDs (CondReconfigId) representing subsequent candidate cell configurations, and transmit the information to the terminal apparatus 10 in advance. In this case, the link information includes an ID indicating a candidate cell configuration which becomes valid in a case where the conditional handover has succeeded.

In addition to the existing conditional handover configuration (first conditional handover configuration), the base station apparatus 20 may notify the terminal apparatus 10 of a conditional handover configuration (second conditional handover configuration) including IDs indicating one or more candidate cell configurations which become valid in a case where the conditional handover has succeeded. The content of the second conditional handover configuration may be the same as the first conditional handover configuration. The terminal apparatus 10 does not consider the cell notified in the second conditional handover configuration as the target cell, and does not evaluate the measurement event. Then, in a case where the conditional handover based on the first conditional handover configuration has succeeded, the terminal apparatus 10 deletes the first conditional handover configuration and enables the second conditional handover configuration.

The base station apparatus 20 may notify the terminal apparatus 10 of information for grouping the existing conditional handover configurations into a first group regarded as the first conditional handover configuration and a second group regarded as the second conditional handover configuration. In this case, the terminal apparatus 10 evaluates the measurement event on the basis of the configuration included in the first group. Then, in a case where the conditional handover has succeeded with respect to the target cell of the first group, the terminal apparatus 10 deletes the conditional handover configuration of the first group and enables the conditional handover configuration of the second group. Note that the base station apparatus 20 may set three or more groups. In this case, the base station apparatus 20 may clearly indicate the order of the groups to be applied by using the group ID, or may implicitly notify the order of the groups to be applied on the basis of the group ID (for example, apply in descending or ascending order of group IDs).

The base station apparatus 20 may notify the terminal apparatus 10 of a MAC control element (MAC CE) in bitmap format in order to indicate the ID of the valid conditional handover configuration. The terminal apparatus 10 may execute conditional handover only on the measurement event or the target cell regarding the ID indicated as valid.

As described above, according to the first embodiment, when the conditional handover to the predicted cell is performed, the configuration information regarding the subsequent conditional handover is held in the terminal apparatus. Therefore, the terminal apparatus can continuously execute the conditional handover without receiving new configuration information from the base station apparatus, and can efficiently perform mobility control in the NTN system.

Note that, for the terminal apparatus which has performed the successful conditional handover, the network may indicate which cell configuration information to retain among a plurality of pieces of cell configuration information. However, in this case, since it is necessary to update the cell configuration information every time handover succeeds, the amount of signaling increases. In addition, since unnecessary cell configuration information is maintained in the terminal apparatus until update processing is started by the network, unnecessary measurement events are evaluated for cells that are not handover destination candidates, and the efficiency of mobility control may be deteriorated.

### <Second Embodiment>

A second embodiment will be described. Note that description of configurations, functions, or procedures common to the first embodiment and the second embodiment will be omitted. That is, points different from the first embodiment will be mainly described below.

The terminal apparatus according to the second embodiment receives and holds the conditional handover configuration. Then, when the cell where an RRC reconnection procedure has succeeded is indicated as a next candidate cell by the link information, the terminal apparatus deletes the candidate cell configuration corresponding to the next candidate cell, and maintains the candidate cell configuration corresponding to a candidate cell other than the next candidate cell.

The base station apparatus according to the second embodiment transmits a plurality of candidate cell configurations, the first information, and the second information to the terminal apparatus as in the first embodiment. In addition, the base station apparatus transmits, to the terminal apparatus, information indicating that the conditional handover configuration is available in the RRC reconnection procedure. Therefore, in a case where the RRC reconnection procedure using the conditional handover configuration has succeeded, the terminal apparatus can delete a part or all of the pre-configured cell configuration information on the basis of the information (link information) indicating the order of the candidate cell configuration information.

FIG. 14 is a flowchart illustrating an example of processing of the terminal apparatus according to the second embodiment. In this embodiment, it is assumed that the link information and information indicating that the conditional handover configuration is available in the RRC reconnection procedure are added to the conditional handover configuration received from the base station apparatus. In addition, this flowchart illustrates processing in a case where the RRC reconnection (RRC reestablishment) procedure is started. Note that the RRC reconnection procedure is performed to recover temporary loss of UL/DL synchronization due to deterioration of downlink reception quality in the terminal apparatus 10, failure in random access, or the like, or instantaneous interruption of a radio link due to expiration of a protection timer in RRC. The RRC reconnection procedure is also referred to as an RRC reestablishment procedure.

In S21, in a case where it is determined that the RRC reconnection procedure is necessary, the terminal apparatus 10 searches for a reconnectable cell (reconnection destination cell) by performing cell search. When detecting the reconnection destination cell by the search, in S22, the terminal apparatus 10 determines whether or not the detected cell is the target cell of the conditional handover. If the detected cell is not the target cell (S22: No), in S25, the terminal apparatus 10 performs the existing RRC reconnection procedure. In this case, after the RRC reconnection procedure has succeeded, the terminal apparatus 10 deletes all the stored conditional handover configurations.

If the detected cell is the target cell (S22: Yes), in S23, the terminal apparatus 10 determines whether the link information has been notified from the base station apparatus 20 and whether the condition for establishing the indicated measurement event is satisfied. Specifically, when the conditional handover configuration includes the valid link information and the RRC reconnection procedure is attempted, the terminal apparatus 10 determines whether or not the configured measurement event is a measurement event related to NTN (that is, the conditional event D1 or the conditional event T1) and whether or not the measurement event is fulfilled. Note that as for whether or not the measurement event is the predetermined measurement event, the base station apparatus 20 may add information such as an identifier to the report configuration. In addition, the base station apparatus 20 may indicate a type of the measurement event related to the NTN.

For the determination as to whether or not the measurement event is fulfilled, a determination criterion similar to that of the evaluation of the measurement event described above may be applied. If the link information is not notified or if the condition for establishing the predetermined measurement event is not satisfied (S23: No), in S25, the terminal apparatus 10 performs the existing RRC reconnection procedure.

If the link information has been notified and the fulfilled measurement event is the indicated measurement event (S23: Yes), in S24, the terminal apparatus 10 determines whether or not the target cell at the time of fulfillment of the measurement event satisfies the condition indicated by the link information. Specifically, the terminal apparatus 10 determines whether or not the target cell at the time of fulfillment of the measurement event (reconnection destination cell) matches with the cell determined on the basis of the link information. Then, if these cells do not match (S24: No), in S25, the terminal apparatus 10 performs the existing RRC reconnection procedure.

On the other hand, if the target cell at the time of fulfillment of the measurement event matches with the cell determined on the basis of the link information (S24: Yes), in S26, the terminal apparatus 10 performs the RRC reconnection procedure according to the embodiment of the present invention. That is, after the RRC reconnection procedure has succeeded, the terminal apparatus 10 deletes the conditional handover configuration regarding the target cell (targeted cell) and maintains the conditional handover configuration regarding the other candidate cells.

In this way, in the RRC reconnection procedure, the terminal apparatus 10 deletes some or all of the pre-configured candidate cell configuration information on the basis of the measurement event type information of the conditional handover, the information indicating the reconnection destination cell, and the link information indicating the order of the conditional handover. Note that the order of the procedure illustrated in FIG. 14 may be appropriately changed so as to obtain a similar effect. For example, the processing of S22, S23, and S24 may be performed simultaneously, or may be performed in a changed order.

In order to reduce the amount of signaling regarding conditional handover, only the configuration of the difference to be changed after the handover may be notified from the base station apparatus to the terminal apparatus. That is, it is also possible to notify the terminal apparatus of a reference configuration serving as a reference in a series of cell configurations and a difference configuration for each candidate cell. In this case, the terminal apparatus 10 may regard, as the reference configuration, the cell configuration applied after the conditional handover has succeeded. In addition, the link information may indicate the application order of the reference configuration and each difference configuration.

Note that, during or after the conditional handover, or during or after the RRC reconnection procedure, a security key may be updated by the upper layer for enhancement or verification of a security function. At this time, the terminal apparatus 10 may delete all the stored conditional handover configurations regardless of the order of the link information. In addition, the update of the security key may be instructed from the base station apparatus 20.

As described above, according to the second embodiment, when the RRC reconnection to the predicted cell is performed, the configuration information regarding the subsequent conditional handover is maintained in the terminal apparatus. Therefore, the terminal apparatus can continuously execute the conditional handover without receiving new configuration information from the base station apparatus after the RRC reconnection procedure, and can efficiently perform mobility control in the NTN system.

In addition, in the non-terrestrial networks, the terminal apparatus and the base station apparatus can execute the conditional handover continuously rather than only once. That is, even in the non-terrestrial networks, it is possible to efficiently perform the mobility control in wireless communication between the terminal apparatus and the base station apparatus.

Note that each of the above-described embodiments is for facilitating understanding of the present invention, and is not intended to limit the present invention. The present invention can be modified and improved without departing from the gist thereof, and the present invention includes equivalents thereof. For example, the "satellite" is not limited to only the artificial satellite, and may be a HAPS or another unmanned or manned aircraft.

### REFERENCE SIGNS LIST

10 : TERMINAL APPARATUS
20 : BASE STATION APPARATUS
30 : CORE NETWORK
11, 21 : PROCESSING UNIT
13, 23 : CONTROL UNIT
15, 25 : RECEPTION UNIT
17, 27 : TRANSMISSION UNIT
19, 29 : TRANSMISSION/RECEPTION ANTENNA UNIT
111, 211 : RADIO RESOURCE PROCESSING UNIT
113, 213 : NTN CONTROL INFORMATION PROCESSING UNIT
210 : GROUND STATION
220 : SERVICE LINK PROVIDING SYSTEM
230 : GATEWAY APPARATUS
240 : NTN PAYLOAD UNIT
250(250A~250C) : FLYING OBJECT
300(300A~300C) : CELL

## Claims

1. A terminal apparatus which supports conditional handover, the terminal apparatus comprising:
a receiver which receives, from a base station apparatus, a plurality of candidate cell configurations respectively corresponding to a plurality of candidate cells regarding a handover destination, first information indicating a type of an event condition for executing the conditional handover, and second information indicating an order of the plurality of candidate cells; and
a processor which determines, at a time of executing handover from a first cell to a second cell, whether to delete some candidate cell configurations of the plurality of candidate cell configurations or to delete all of the plurality of candidate cell configurations on a basis of whether or not the event condition of the type indicated by the first information is fulfilled and whether or not the second cell is a candidate cell corresponding to the order indicated by the second information.

2. The terminal apparatus according to claim 1, wherein
the event condition is a time-based or distance-based event condition.

3. The terminal apparatus according to claim 1, wherein
when the event condition of the type indicated by the first information is fulfilled and the second cell is indicated as a next candidate cell by the second information, the processor deletes a candidate cell configuration corresponding to the next candidate cell and maintains a candidate cell configuration corresponding to a candidate cell other than the next candidate cell.

4. The terminal apparatus according to claim 1, wherein
when the event condition of the type indicated by the first information is fulfilled and the second cell is indicated as a next candidate cell by the second information, the processor deletes a candidate cell configuration corresponding to the next candidate cell and maintains a candidate cell configuration corresponding to a candidate cell applied after the next candidate cell in the second information.

5. The terminal apparatus according to claim 1, wherein
when a cell where a reestablishment procedure has succeeded is indicated as a next candidate cell by the second information, the processor deletes a candidate cell configuration corresponding to the next candidate cell and maintains a candidate cell configuration corresponding to a candidate cell other than the next candidate cell.

6. The terminal apparatus according to claim 1, wherein
in the second information, identifiers for identifying candidate cell configurations to be applied next are associated with a plurality of identifiers for identifying the plurality of candidate cell configurations, respectively.

7. A base station apparatus which communicates with a terminal apparatus which supports conditional handover, the base station apparatus comprising:
a processor which generates a plurality of candidate cell configurations respectively corresponding to a plurality of candidate cells regarding a handover destination of the terminal apparatus, first information indicating a type of an event condition for executing the conditional handover in the terminal apparatus, and second information indicating an order of the plurality of candidate cells; and
a transmitter which transmits the plurality of candidate cell configurations, the first information, and the second information to the terminal apparatus, so that, when the terminal apparatus performs handover from a first cell to a second cell, the terminal apparatus determines whether to delete some candidate cell configurations of the plurality of candidate cell configurations or to delete all of the plurality of candidate cell configurations on a basis of whether or not the event condition of the type indicated by the first information is fulfilled and whether or not the second cell is a candidate cell corresponding to the order indicated by the second information.

8. The base station apparatus according to claim 7, wherein
the event condition is a time-based or distance-based event condition.

9. The base station apparatus according to claim 7, wherein
the second information is information that, when the second cell is indicated as a next candidate cell by the second information, causes the terminal apparatus to delete a candidate cell configuration corresponding to the next candidate cell and maintain a candidate cell configuration corresponding to a candidate cell other than the next candidate cell.

10. The base station apparatus according to claim 7, wherein
the second information is information that, when the second cell is indicated as a next candidate cell by the second information, causes the terminal apparatus to delete a candidate cell configuration corresponding to the next candidate cell and maintain a candidate cell configuration corresponding to a candidate cell applied after the next candidate cell in the second information.

11. The base station apparatus according to claim 7, wherein
the second information is information that, when a cell where a reestablishment procedure has succeeded is indicated as a next candidate cell by the second information, causes the terminal apparatus to delete a candidate cell configuration corresponding to the next candidate cell and maintain a candidate cell configuration corresponding to a candidate cell other than the next candidate cell.

12. The base station apparatus according to claim 7, wherein
in the second information, identifiers for identifying candidate cell configurations to be applied next are associated with a plurality of identifiers for identifying the plurality of candidate cell configurations, respectively.

13. A handover control method which is executed in a terminal apparatus which supports conditional handover, the handover control method comprising:
receiving, from a base station apparatus, a plurality of candidate cell configurations respectively corresponding to a plurality of candidate cells regarding a handover destination, first information indicating a type of an event condition for executing the conditional handover, and second information indicating an order of the plurality of candidate cells; and
deleting some candidate cell configurations of the plurality of candidate cell configurations or deleting all of the plurality of candidate cell configurations at a time of executing handover from a first cell to a second cell, on a basis of whether or not the event condition of the type indicated by the first information is fulfilled and whether or not the second cell is a candidate cell corresponding to the order indicated by the second information.

14. A handover control method which is executed in a base station apparatus which communicates with a terminal apparatus which supports conditional handover, the handover control method comprising:
generating a plurality of candidate cell configurations respectively corresponding to a plurality of candidate cells regarding a handover destination of the terminal apparatus, first information indicating a type of an event condition for executing the conditional handover in the terminal apparatus, and second information indicating an order of the plurality of candidate cells; and
transmitting the plurality of candidate cell configurations, the first information, and the second information to the terminal apparatus, so that, when the terminal apparatus performs handover from a first cell to a second cell, the terminal apparatus determines whether to delete some candidate cell configurations of the plurality of candidate cell configurations or to delete all of the plurality of candidate cell configurations on a basis of whether or not the event condition of the type indicated by the first information is fulfilled and whether or not the second cell is a candidate cell corresponding to the order indicated by the second information.
